# EUROPÄISCHE PATENTSCHRIFT

(11) **EP 0 814 120 B1**
(45) Veröffentlichungstag und Bekanntmachung des Hinweises auf die Patenterteilung: **13.01.1999**
(21) Anmeldenummer: 97109543.5
(22) Anmeldetag: 12.06.1997
(51) Int. Cl.: C08K 3/16, C08L 83/04

(54) **Unter Abspaltung von Alkoholen zu Elastomeren vernetzbare Organopolysiloxanmassen**
Organopolysiloxane compositions which can be cross-linked to form elastomers with elimination of alcohols
Mélanges d'organopolysiloxanes pouvant réticulables en élastomères sous élimination d'alcools

(30) Priorität: 19.06.1996 DE 19624509
(43) Veröffentlichungstag der Anmeldung: 29.12.1997
(73) Patentinhaber: Wacker-Chemie GmbH, 81737 München (DE)
(72) Erfinder: Oberneder, Stefan, Dr., 84489 Burghausen (DE); Pilzweger, Erich, 84387 Julbach (DE); Stepp, Michael, Dr., 84489 Burghausen (DE); Stallbauer, Reinhard, 84367 Zeilarn (DE); Dorsch, Norman, 84489 Burghausen (DE)
(74) Vertreter: Budczinski, Angelika

(56) Entgegenhaltungen:
- WO-A-96/38487
- US-A- 5 108 784
- PATENT ABSTRACTS OF JAPAN vol. 018, no. 471 (C-1245), 2.September 1994 & JP 06 146169 A (UNITIKA LTD), 27.Mai 1994,
- PATENT ABSTRACTS OF JAPAN vol. 006, no. 049 (C-096), 31.März 1982 & JP 56 163149 A (HITACHI CABLE LTD), 15.Dezember 1981, & DATABASE WPI Derwent Publications Ltd., London, GB; AN 94-211462

## Beschreibung

Die Erfindung betrifft unter Ausschluß von Feuchtigkeit lagerfähige und unter Zutritt von Feuchtigkeit bei Raumtemperatur unter Abspaltung von Alkoholen zu Elastomeren härtende Organopolysiloxanmassen, die sich durch eine besonders hohe Lagerstabilität auszeichnen.

Der Begriff Organopolysiloxane soll im Rahmen der vorliegenden Erfindung dimere, oligomere und polymere Siloxane umfassen.

Organopolysiloxanmassen, die unter Ausschluß von Feuchtigkeit lagerfähig sind und unter Zutritt von Feuchtigkeit bei Raumtemperatur unter Abspaltung von Alkoholen vernetzen, sog. RTV-1-Alkoxymassen, sind bereits seit langem bekannt. Sie bestehen im wesentlichen aus mit Organyloxygruppen terminiertem Siliconpolymer, Vernetzer mit mindestens drei hydrolysierbaren Gruppen, Katalysator und gegebenenfalls Additive. Der Vorteil dieser RTV-1-Alkoxysysteme ist, daß sie beim Vernetzungsvorgang lediglich geruchlose, neutrale, umweltverträgliche Spaltprodukte - nämlich Alkohole - freisetzen.

Ein wesentlicher Nachteil der RTV-1-Alkoxymassen ist die im Vergleich zu den entsprechenden Essig-, Oxim- und Aminsystemen verringerte Lagerstabilität. Dies bedeutet, daß die RTV-1-Alkoxymasse zwar nach Herstellung in der gewünschten Weise zu einem Elastomer härtet, diese Härtungseigenschaften jedoch bei Lagerung der Massen unter Luftausschluß meist verloren gehen. Nach längerer Lagerzeit beobachtet man deshalb im allgemeinen eine zeitlich verlängerte Aushärtung zu Elastomeren, deren mechanische Eigenschaften deutlich schlechter als die der anfänglichen Elastomeren sind. Im schlechtesten Fall kann die Aushärtung zu Elastomeren nach Lagerung völlig ausbleiben. Ursache für diese zeitliche Veränderung der Härtung ist häufig die Äquilibrierung von Polymerketten mit freiem, in der Masse gelösten Alkohol unter Katalyse des metallorganischen Kondensationskatalysators, wobei Polymerenden mit einer Alkoxygruppe generiert werden, die für eine Weiterreaktion zu einem Netzwerk unter den Anwendungsbedingungen (Raumtemperatur) zu reaktionsträge sind. Somit bleibt die Vernetzung aus. Der Alkohol für diese unerwünschte Äquilibrierungsreaktion entsteht aus der Reaktion des Alkoxyvernetzers mit Wasser und anderen OH-Gruppen, wie z.B. SilanolGruppen, die unvermeidlich bei der Herstellung der RTV-1-Alkoxymassen über das Polymer, den Füllstoff und etwaige andere Additive sowie die Herstellungsweise (Reaktionsgefäß, Herstellung in der Atmosphäre) in die Masse gelangen. Zur Vermeidung der beschriebenen Veränderung der Härtungseigenschaften bei Lagerung der RTV-1-Alkoxymassen wurden daher bereits zahlreiche Versuche unternommen. Hierzu sei beispielsweise auf EP-A 236 042 (Dow Corning Corp.; ausgegeben am 09.09.1987) und DE-A 38 01 389 (Wacker-Chemie GmbH; ausgegeben am 27. Juli 1989) bzw. die entsprechende US-A 4,942,211 verwiesen.

Des weiteren sei auf US 4,499,230 (General Electric Co.; ausgegeben am 12.02.1995) verwiesen, in der als Stabilisatoren Molekularsiebe oder Zeolithe zugesetzt werden, die jedoch keine oder nur eine geringe Scavenger-Wirkung aufweisen.

Gegenstand der vorliegenden Erfindung sind unter Ausschluß von Feuchtigkeit lagerfähige und bei Zutritt von Feuchtigkeit bei Raumtemperatur unter Abspaltung von Alkoholen zu Elastomeren vernetzbare Organopolysiloxanmassen herstellbar unter Verwendung von
(A) im wesentlichen linearen Polyorganosiloxanen mit mindestens zwei Organyloxyresten an einer jeden Endgruppe, gegebenenfalls
(B) organyloxyfunktionellen Vernetzern mit mindestens drei Organyloxygruppen,
   gegebenenfalls
(C) Kondensationskatalysatoren,
   sowie
(D) CaCl₂ und/oder MgCl₂.

Die erfindungsgemäßen Massen können je nach Anwendung standfest oder fließfähig sein.

Bei den erfindungsgemäß eingesetzten Polyorganosiloxanen (A) handelt es sich vorzugsweise um solche der allgemeinen Formel

(R²O)₃₋ₐR¹ ₐSiO-[R₂SiO]ₙ-SiR¹ ₐ(OR²)₃₋ₐ (I),

wobei
- a: 0 oder 1 ist,
- R: gleiche oder verschiedene SiC-gebundene Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, bedeutet und
- R¹: gleich oder verschieden sein kann und Wasserstoffatom ist oder eine für R angegebene Bedeutung hat,
- R²: gleich oder verschieden sein kann und einen gegebenenfalls mit Amino-, Ester-, Ether-, Keto- und Halogengruppen substituierten Kohlenwasserstoffrest mit 1 bis 18 Kohlenstoffatomen, der mit Sauerstoffatomen unterbrochen sein kann, bedeutet und
- n: eine ganze Zahl von 10 bis 10 000, bevorzugt 100 bis 3 000, besonders bevorzugt 400 bis 2 000, ist.

Beispiele für Kohlenwasserstoffreste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der α- und der β-Phenylethylrest.

Beispiele für substituierte Kohlenwasserstoffreste R sind halogenierte Reste, wie der 3-Chlorpropylrest, der 3,3,3-Trifluorpropylrest, Chlorphenylreste, Hexafluorpropylreste, wie der 1-Trifluormethyl-2,2,2-trifluorethylrest; der 2-(perfluorhexyl)ethylrest, der 1,1,2,2-Tetrafluorethyloxypropylrest, der 1-Trifluormethyl-2,2,2-trifluorethyloxypropylrest, der Perfluorisopropyloxyethylrest, der Perfluorisopropyloxypropylrest; durch Aminogruppen substituierte Reste, wie der N-(2-aminoethyl)-3-aminopropylrest, der 3-Aminopropylrest und der 3-(Cyclohexylamino)propylrest; etherfunktionelle Reste, wie der 3-Methoxypropylrest und der 3-Ethoxypropylrest; cyanofunktionelle Reste, wie der 2-cyanoethylrest; esterfunktionelle Reste, wie der Methacryloxypropylrest; epoxyfunktionelle Reste, wie der Glycidoxypropylrest, und schwefelfunktionelle Reste, wie der 3-Mercaptopropylrest.

Bevorzugt als Rest R sind unsubstituierte Kohlenwasserstoffreste mit 1 bis 10 Kohlenstoffatomen sowie mit Aminogruppen oder mit Fluorresten substituierte Kohlenwasserstoffreste mit 1 bis 10 Kohlenstoffatomen, wobei der Methylrest besonders bevorzugt ist.

Beispiele für unsubstituierte Kohlenwasserstoffreste R¹ sind die für R angegebenen Kohlenwasserstoffreste.

Beispiele für substituierte Kohlenwasserstoffreste R¹ sind der 3-(2-Aminoethylamino)propylrest, der 3-(Cyclohexylamino)propylrest, der 3-(Glycidoxy)propylrest, 3-(N,N-Diethyl-2-aminoethylamino)propylrest, 3-(Butylamino)propylrest und 3-(3-Methoxypropylamino)propylrest.

Bevorzugt handelt es sich bei Rest R¹ um Wasserstoffatom, unsubstituierte Kohlenwasserstoffreste mit 1 bis 10 Kohlenstoffatomen sowie um mit Amino-, Mercapto-, Morpholino-, Glycidoxy-, Acryloxy- und Methacryloxygruppen substituierte Kohlenwasserstoffreste mit 1 bis 10 Kohlenstoffatomen.

Besonders bevorzugt handelt es sich bei Rest R¹ um Alkylreste und Alkenylreste mit 1 bis 4 Kohlenstoffatomen, insbesondere um den Methyl-, Ethyl- und den Vinylrest, sowie um über Alkylenreste mit 2 bis 6 Kohlenstoffatomen mit dem Siliciumatom verbundene, gegebenenfalls substituierte Amino- und Glycidoxygruppen.

Bevorzugt handelt es sich bei Rest R² um Alkylreste mit 1 bis 8 Kohlenstoffatomen, die mit Methoxy- oder Ethoxygruppen substituiert sein können, wobei Methyl- oder Ethylreste besonders bevorzugt sind.

Beispiele für Alkylreste R² sind die oben für R angegebenen Beispiele für Alkylreste.

Der durchschnittliche Wert für die Zahl n in Formel (I) ist vorzugsweise so gewählt, daß das Organopolysiloxan der Formel (I) eine Viskosität von 1 000 bis 1 000 000 mm²/s, besonders bevorzugt von 5 000 bis 500 000 mm²/s, jeweils gemessen bei einer Temperatur von 25°C, besitzt.

Obwohl in Formel (I) nicht angegeben, können bis zu 10 Molprozent der Diorganosiloxaneinheiten durch andere, meist jedoch nur als mehr oder weniger schwer vermeidbare Verunreinigungen vorliegende Siloxaneinheiten, wie R₃SiO_{1/2}-, RSiO_{3/2}- und SiO_{4/2}-Einheiten, ersetzt sein, wobei R die vorstehend dafür angegebene Bedeutung hat.

Beipiele für die in den erfindungsgemäßen Massen eingesetzten Polyorganosiloxane (A) sind

(MeO)₂Mesio[SiMe₂O]₂₀₀₋₂₀₀₀SiMe(OMe)₂,

(EtO)₂MeSiO[SiMe₂O]₂₀₀₋₂₀₀₀SiMe(OEt)₂,

(MeO)₂ViSiO[SiMe₂O]₂₀₀₋₂₀₀₀SiVi(OMe)₂,

(EtO)₂ViSiO[SiMe₂O]₂₀₀₋₂₀₀₀SiVi(OEt)₂,

(MeO)₂CapSiO[SiMe₂O]₂₀₀₋₂₀₀₀SiCap(OMe)₂,

(MeO)₂BapSiO[SiMe₂O]₂₀₀₋₂₀₀₀SiBap(OMe)₂

und

(EtO)₂BapSiO[SiMe₂O]₂₀₀₋₂₀₀₀SiBap(OEt)₂,

wobei Me Methylrest, Et Ethylrest, Vi Vinylrest, Cap 3-(Cyclohexylamino)propylrest und Bap 3-(n-Butylamino)propylrest bedeutet.

Bei dem erfindungsgemäß eingesetzten Organopolysiloxan (A) kann es sich um eine einzelne Art wie auch um ein Gemisch aus mindestens zwei Arten derartiger Organopolysiloxane handeln.

Die in den erfindungsgemäßen Massen eingesetzten Polyorganosiloxane (A) sind handelsübliche Produkte bzw. können nach in der Siliciumchemie bekannten Verfahren, beispielsweise durch Umsetzung von α,ω-Dihydroxypolyorganosiloxanen mit den entsprechenden Organyloxysilanen, hergestellt werden.

Bei den gegebenenfalls eingesetzten organyloxyfunktionellen Vernetzern (B) kann es sich um beliebige, bisher bekannte Organyloxyvernetzer handeln, wie beispielsweise Silane oder Siloxane mit mindestens drei Organyloxygruppen sowie cyclische Silane gemäß DE-A 36 24 206 (Wacker-Chemie GmbH; ausgegeben am 11. Februar 1988) bzw. der entsprechenden US-A 4,801,673 der Formel 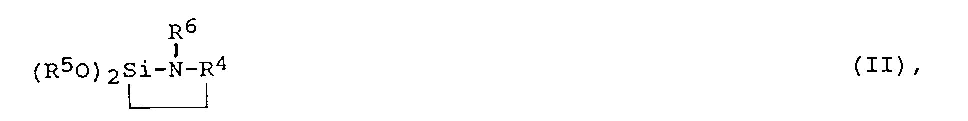 worin
- R⁴: einen zweiwertigen Kohlenwasserstoffrest bedeutet,
- R⁵: gleich oder verschieden sein kann und ein für R² angegebene Bedeutung hat und
- R⁶: Wasserstoffatom, einen Alkyl- oder einen Aminoalkylrest bedeutet.

Bei den in den erfindungsgemäßen Massen gegebenenfalls eingesetzten Organyloxyvernetzern (B) handelt es sich vorzugsweise um Organosilciumverbindungen der Formel

(R²O)₄₋ₘSiR³ ₘ (III) ,

wobei
- R²: gleich oder verschieden sein kann und eine der oben angegebenen Bedeutung hat,
- R³: eine oben für R¹ genannte Bedeutung besitzt oder einen mit dem Rest -SiR¹_{b}(OR²)_{3-b} substituierten Kohlenwasserstoffrest darstellt mit R¹ und R² gleich der obengenannten Bedeutung und b gleich 0, 1, 2 oder 3 und
- m: 0 oder 1 ist,
sowie deren Teilhydrolysate.

Bei den Teilhydrolysaten kann es sich dabei um Teilhomohydrolysate handeln, d.h. Teilhydrolysate von einer Art von Organosiliciumverbindung der Formel (III), wie auch um Teilcohydrolysate, d.h. Teilhydrolysate von mindestens zwei verschiedenen Arten von Organosiliciumverbindungen der Formel (III).

Handelt es sich bei den in den erfindungsgemäßen Massen gegebenenfalls eingesetzten Vernetzern (B) um Teilhydrolysate von Organosiliciumverbindungen der Formel (III), so sind solche mit bis zu 6 Siliciumatomen bevorzugt.

Beispiele für Rest R³ sind die oben für Rest R¹ genannten Beispiele sowie mit Resten -SiR¹_{b}(OR²)_{3-b} substituierte Kohlenwasserstoffreste mit 1 bis 6 Kohlenstoffatomen, wobei b gleich 0 oder 1 ist und R² die obengenannte Bedeutung hat.

Bevorzugte Rest R³ sind die für R¹ bevorzugt genannten Reste sowie mit Resten -SiR¹_{b}(OR²)_{3-b} substituierte Kohlenwasserstoffreste mit 1 bis 6 Kohlenstoffatomen, wobei b gleich 0 oder 1 ist und R² die obengenannte Bedeutung hat.

Besonders bevorzugte Reste R³ sind die für R¹ besonders bevorzugt genannten Reste sowie mit Resten -Si(OR²)₃ substituierte Kohlenwasserstoffreste mit 2 Kohlenstoffatomen, wobei R² = Ethyl- oder Methylrest bedeutet.

Besonders bevorzugt handelt es sich bei den in den erfindungsgemäßen Massen gegebenenfalls eingesetzten Vernetzern (B) um Tetramethoxysilan, Tetraethoxysilan, Methyltrimethoxysilan, Methyltriethoxysilan, Vinyltrimethoxysilan, Vinyltriethoxysilan, Phenyltrimethoxysilan, Phenyltriethoxysilan, 3-Aminopropyltrimethoxysilan, 3-Aminopropyltriethoxysilan, 3-Cyanopropyltrimethoxysilan, 3-Cyanopropyltriethoxysilan, 3-(2-Aminoethylamino)propyltrimethoxysilan, 3-(2-Aminoethylamino)propyltriethoxysilan, 3-(N,N-Diethyl-2-aminoethylamino)propyltrimethoxysilan, 3-(N,N-Diethyl-2-aminoethylamino)propyltriethoxysilan, 3-(Cyclohexylamino)propyltrimethoxysilan, 3-(Cyclohexylamino)propyltriethoxysilan, 3-(Glycidoxy)propyltriethoxysilan, 1,2-Bis(trimethoxysilyl)ethan, 1,2-Bis(triethoxysilyl)ethan sowie Teilhydrolysate der genannten alkoxyfunktionellen Organosiliciumverbindungen, wie z .B. Hexaethoxydisiloxan.

Bei dem erfindungsgemäß gegebenenfalls eingesetzten Vernetzer (B) kann es sich um eine einzelne Art wie auch um ein Gemisch aus mindestens zwei Arten derartiger Organyloxyvernetzer handeln.

Die in den erfindungsgemäßen Massen gegebenenfalls eingesetzten Vernetzer (B) sind handelsübliche Produkte bzw. können nach in der Siliciumchemie bekannten Verfahren hergestellt werden.

Die erfindungsgemäßen Massen enthalten Vernetzer (B) in Mengen von vorzugsweise 0 bis 50 Gewichtsteilen, besonders bevorzugt 0,1 bis 20 Gewichtsteilen, insbesondere 0,5 bis 10 Gewichtsteilen, jeweils bezogen auf 100 Gewichtsteile Organopolysiloxan (A).

Es können die erfindungsgemäßen Massen beliebige Kondensationskatalysatoren (C) enthalten, die auch bisher in unter Ausschluß von Wasser lagerfähigen, bei Zutritt von Wasser bei Raumtemperatur zu Elastomeren vernetzenden Massen vorliegen konnten. Dazu gehören alle in der eingangs genannten DE-A 38 01 389 erwähnten Kondensationskatalysatoren, wie etwa Butyltitanate und organische Zinnverbindungen, wie Din-butylzinndiacetat, Di-n-butylzinndilaurat und Umsetzungsprodukte von je Molekül mindestens zwei über Sauerstoff an Silicium gebundene, gegebenenfalls durch eine Alkoxygruppe substituierte, einwertige Kohlenwasserstoffreste als hydrolysierbare Gruppen aufweisendem Silan oder dessen Oligomer mit Diorganozinndiacylat, wobei in diesen Umsetzungsprodukten alle Valenzen der Zinnatome durch Sauerstoffatome der Gruppierung =SiOSn= bzw. durch SnC-gebundene, einwertige organische Reste abgesättigt sind.

Bevorzugte Kondensationskatalysatoren (C) sind metallorganische Kondensationskatalysatoren, insbesondere Derivate des Titans, Aluminiums, Zinns sowie Calciums und Zinks, wobei Dialkylzinnverbindungen sowie Zinkdicarboxylate besonders bevorzugt sind.

Beispiele für bevorzugte metallorganische Kondensationskatalysatoren sind die in US-A 4,517,337 (General Electric Co.; ausgegeben am 14. Mai 1985) beschriebenen Dialkyldi(β-diketo)stannate, Dialkylzinndicarboxylate, Calcium- und Zinkdicarboxylate sowie Butyltitanchelatverbindungen.

Beispiele für besonders bevorzugte metallorganische Kondensationskatalysatoren sind Dibutylzinndiacetat, Dibutylzinndilaurat, Dibutylzinndi(2-ethylhexanoat) und Zinkdi(2-ethylhexanoat).

Bei den in den erfindungsgemäßen Massen gegebenenfalls eingesetzten Kondensationskatalysatoren (C) kann es sich um eine einzelne Art oder um ein Gemisch aus mindestens zwei Arten derartiger Kondensationskatalysatoren handeln.

Die erfindungsgemäßen Massen enthalten Kondensationskatalysator (C) in Mengen von vorzugsweise 0 bis 10 Gewichtsteilen, besonders bevorzugt 0,01 bis 5 Gewichtsteilen, insbesondere 0,1 bis 4 Gewichtsteilen, jeweils bezogen auf 100 Gewichtsteile Organopolysiloxan (A).

Vorzugsweise handelt es sich bei der erfindungsgemäß eingesetzten Komponente (D) um CaCl₂ und MgCl₂ mit einem Feuchtigkeitsgehalt von unter 10 Gew-%, besonders bevorzugt unter 5 Gew-%, insbesondere von Null.

Bevorzugt wird als Komponente (D) CaCl₂ und/oder MgCl₂ in pulverisierter Form eingesetzt, wobei der mittlere Teilchendurchmesser bevorzugt kleiner 100 µm, besonders bevorzugt kleiner 50 µm, insbesondere kleiner 30 µm ist.

Vorteilhafterweise sollte eine gegebenenfalls durchzuführende Pulverisierung von CaCl₂ und MgCl₂ unter Ausschluß von Luftfeuchtigkeit erfolgen.

Bei der in den erfindungsgemäßen Massen eingesetzten Komponente (D) kann es sich um eine einzelne Art oder um ein Gemisch aus mindestens zwei Arten derartiger Verbindungen handeln.

Die erfindungsgemäßen Massen enthalten Komponente (D) in Mengen von vorzugsweise 0,1 bis 10 Gewichtsteilen, besonders bevorzugt 0,5 bis 6 Gewichtsteilen, insbesondere 1 bis 5 Gewichtsteilen, jeweils bezogen auf 100 Gewichtsteile Organopolysiloxan (A).

Zusätzlich zu den oben beschriebenen Komponenten (A), (B), (C) und (D) können die erfindungsgemäßen Massen nun weitere Stoffe, wie Weichmacher (E), Füllstoffe (F), Haftvermittler (G) und Additive (H) enthalten, wobei die zusätzlichen Stoffe (E) bis (H) die gleichen sein können, die auch bisher in unter Abspaltung von Alkoholen vernetzbaren Massen eingesetzt worden sind.

Beispiele für Weichmacher (E) sind beispielsweise bei Raumtemperatur flüssige, durch Trimethylsiloxygruppen endblockierte Dimethylpolysiloxane sowie hochsiedende Kohlenwasserstoffe, wie zum Beispiel Paraffinöle.

Die erfindungsgemäßen Massen enthalten Weichmacher (E) in Mengen von vorzugsweise 0 bis 300 Gewichtsteilen, besonders bevorzugt 10 bis 200 Gewichtsteilen, insbesondere 20 bis 100 Gewichtsteilen, jeweils bezogen auf 100 Gewichtsteile Organopolysiloxan (A).

Beispiele für Füllstoffe (F) sind beispielsweise nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, Ruß, wie Furnace- und Acetylenruß und Silicium-Aluminium-Mischoxide großer BET-Oberfläche; faserförmige Füllstoffe, wie Asbest sowie Kunststoffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Die erfindungsgemäßen Massen enthalten Füllstoffe (F) in Mengen von vorzugsweise 0 bis 300 Gewichtsteilen, besonders bevorzugt 1 bis 200 Gewichtsteilen, insbesondere 5 bis 200 Gewichtsteilen, jeweils bezogen auf 100 Gewichtsteile Organopolysiloxan (A).

Beispiele für die in den erfindungsgemäßen Organopolysiloxanmassen eingesetzten Haftvermittler (G) sind Silane und Organopolysiloxane mit funktionellen Gruppen, wie beispielsweise solche mit Aminoalkyl-, Glycidoxypropyl- oder Methacryloxypropylresten sowie Tetraalkoxysilane. Falls jedoch bereits eine andere Komponente, wie etwa Siloxan (A) oder Vernetzer (B), die genannten funktionellen Gruppen aufweist, kann auf einen Zusatz von Haftvermittler verzichtet werden.

Die erfindungsgemäßen Massen enthalten Haftvermittler (G) in Mengen von vorzugsweise 0 bis 50 Gewichtsteilen, besonders bevorzugt 1 bis 20 Gewichtsteilen, insbesondere 1 bis 10 Gewichtsteilen, jeweils bezogen auf 100 Gewichtsteile Organopolysiloxan (A).

Beispiele für Additive (H) sind Pigmente, Farbstoffe, Riechstoffe, Fungicide, Oxydationsinhibitoren, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit einem SiC-gebundenen Mercaptoalkylrest, zellenerzeugende Mittel, z.B. Azodicarbonamid, Hitzestabilisatoren und Thixotropiermittel.

Die erfindungsgemäßen Massen enthalten Additive (H) in Mengen von vorzugsweise 0 bis 100 Gewichtsteilen, besonders bevorzugt 0 bis 30 Gewichtsteilen, insbesondere 0 bis 10 Gewichtsteilen, jeweils bezogen auf 100 Gewichtsteile Organopolysiloxan (A).

Bei den einzelnen Bestandteilen (E), (F), (G) und (H) der erfindungsgemäßen unter Abspaltung von Alkoholen vernetzbaren Organopolysiloxanmassen kann es sich jeweils um eine Art derartiger Bestandteile wie auch um ein Gemisch aus mindestens zwei Arten derartiger Bestandteile handeln.

Bevorzugt handelt es sich bei den erfindungsgemäßen Massen um solche, die
(A) Polydiorganosiloxan der Formel (I),
(B) Vernetzer,
(C) Kondensationskatalysator,
(D) MgCl₂ und/oder CaCl₂ sowie
gegebenenfalls weitere Stoffe
enthalten.

Besonders bevorzugte handelt es sich bei den erfindungsgemäßen Massen um solche, die aus
(A) 100 Gewichtsteilen Polydiorganosiloxan der Formel (I),
(B) 0,1 bis 50 Gewichtsteilen Vernetzer der Formel (III),
(C) 0,01 bis 10 Gewichtsteilen metallorganischen Kondensationskatalysator,
(D) 0,1 bis 10 Gewichtsteilen MgCl₂ und/oder CaCl₂,
(E) 0 bis 300 Gewichtsteilen Weichmacher,
(F) 0 bis 300 Gewichtsteilen Füllstoffe,
(G) 0 bis 50 Gewichtsteilen Haftvermittler und
(H) 0 bis 100 Gewichtsteilen Additive
bestehen.

Zur Bereitung der erfindungsgemäßen Massen können alle Bestandteile der jeweiligen Masse in beliebiger Reihenfolge miteinander vermischt werden. Um eine möglichst homogene Verteilung von CaCl₂ bzw. MgCl₂ in den vernetzbaren Massen zu erhalten, wird vorzugsweise der anorganische Feststoff in einem vorgeschalteten Schritt mit flüssigen Verbindungen, wie etwa trimethylsilylendblockierten Polysiloxanen und organischen Weichmachern, wie z.B. Polybutylenen, Polyalkylaromaten, Polystyrolen, etc., zu einer Paste verarbeitet und dann in Pastenform in die die übrigen Komponenten enthaltende Masse eingearbeitet werden.

Die Herstellung der erfindungsgemäßen Massen kann bei Raumtemperatur und dem Druck der umgebenden Atmosphäre, also etwa 900 bis 1100 hPa erfolgen. Falls erwünscht, kann die Zubereitung aber auch bei höheren Temperaturen erfolgen, z.B. bei Temperaturen im Bereich von 35°C bis 135°C.

Die Herstellung der erfindungsgemäßen Organopolysiloxanmassen incl. der gegebenenfalls durchgeführten Pastenherstellung und deren Lagerung muß unter im wesentlichen wasserfreien Bedingungen erfolgen, da ansonsten die Massen vorzeitig aushärten können.

Für die Vernetzung der erfindungsgemäßen Massen zu Elastomeren reicht der übliche Wassergehalt der Luft aus. Die Vernetzung kann bei Raumtemperatur oder, falls erwünscht, auch bei höheren oder niedrigeren Temperaturen als Raumtemperatur, z.B. bei -5° bis 10°C oder bei 30° bis 50°C, durchgeführt werden.

Die erfindungsgemäßen unter Abspaltung von Alkoholen zu Elastomeren vernetzbaren Organopolysiloxanmassen haben den Vorteil, daß sie sich durch eine sehr hohe Lagerstabilität und eine hohe Vernetzungsgeschwindigkeit auszeichnen. So zeigen die erfindungsgemäßen Massen bei einer Lagerung von bis zu 18 Monaten bei Raumtemperatur ein nahezu unverändertes Vulkanisationsverhalten.

Des weiteren haben die erfindungsgemäßen Massen den Vorteil, daß CaCl₂ und MgCl₂ mit OH-Gruppen, insbesondere mit Alkohol und Wasser, bereits bei Raumtemperatur reagieren. Verbindungen mit OH-Gruppen sind dabei in RTV-Alkoxymassen hauptsächlich Wasser, das mit den Rezepturbestandteilen wie etwa dem Polysiloxan oder den Füllstoffen in die Masse eingeschleppt wird, Alkohole, die sich bei der Endblockierung der OH-Polymere sowie der Umsetzung von Si-OH-Gruppen, z.B. an der als Füllstoff gegebenenfalls eingesetzten Kieselsäure, oder Wasser mit Vernetzer bilden. Dabei werden vorteilhafterweise nach der Reaktion mit Wasser und Alkoholen keine Spaltprodukte freigesetzt. Es werden lediglich ökologisch unbedenkliche Adukte der eingesetzten Salze mit Wasser und Alkohol erhalten, die bekanntlich nichtflüchtig sind und somit im Elastomer verbleiben.

Ein weiterer Vorteil der erfindungsgemäßen Massen ist die Tatsache, daß die eingesetzten Verbindungen (D) leicht verfügbare Massenprodukte sind.

Die erfindungsgemäßen bzw. erfindungsgemäß hergestellten Massen können für alle Verwendungszwecke eingesetzt werden, für die unter Ausschluß von Wasser lagerfähige, bei Zutritt von Wasser bei Raumtemperatur zu Elastomeren vernetzende Organopolysiloxanmassen eingesetzt werden können.

Die erfindungsgemäßen bzw. erfindungsgemäß hergestellten Massen eignen sich somit ausgezeichnet beispielsweise als Abdichtmassen für Fugen, einschließlich senkrecht verlaufen; der Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau oder bei der Herstellung von Aquarien oder Vitrinen, sowie z.B. zur Herstellung von Schutzüberzügen, einschließlich solcher für der ständigen Einwirkung von Süßoder Meerwasser ausgesetzte Oberflächen, oder das Gleiten verhindernden Überzügen, oder von gummielastischen Formkörpern sowie für die Isolierung von elektrischen oder elektronischen Vorrichtungen.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des weiteren beziehen sich alle Angaben von Teilen und Prozentsätzen, soweit nichts anderes angegeben ist, auf das Gewicht.

In den folgenden Beispielen wird Shore-A-Härte nach DIN 53 505-87/Normstab S1 (Deutsche Industrie Norm) bestimmt.

### Beispiel 1

Zu 55 g eines α,ω-Bis(dimethoxymethyl)polydimethylsiloxans der Viskosität 80 000 mm²/s werden 20 g eines α,ω-Bis(trimethylsiloxy)polydimethylsiloxans der Viskosität 100 mm²/s, 8,0 g Methyltrimethoxysilan sowie 2 g 3-Aminopropyltriethoxysilan (käuflich erhältlich unter der Bezeichnung "Silan GF 93" bei der Wacker-Chemie GmbH) gemischt. Anschließend werden 4 g MgCl₂ mit einem Feuchtigkeitsgehalt von < 1,5 Gew-% und einem Teilchendurchmesser von 90 % < 44 µm (käuflich erhältlich bei der Fa. Aldrich, Deutschland) in die Masse eingerührt sowie 0,25 g Dibutylzinndiacetat (käuflich erhältlich bei der Fa. Acima, CH-Buchs) zugegeben. Zuletzt werden 11 g pyrogene, oberflächenbehandelte Kieselsäure mit einer spezifischen Oberfläche nach BET von 150 m²/g (käuflich erhältlich unter dem Markennamen "WACKER HDK" V15 bei der Wacker-Chemie GmbH) homogen in die Masse eingearbeitet.

Die so hergestellte Masse wird in Tuben luftdicht abgefüllt und bei 50°C gelagert.

Unmittelbar nach der Herstellung sowie nach 2, 4, 8 und 12 Wochen Lagerung wird
a) anhand von Raupen die Hautbildungszeit (Zeit bis zur Ausbildung einer trockenen Oberfläche der Raupe) ermittelt; dabei wird diejenige Zeit bestimmt, die zwischen dem Aufbringen der Raupe und dem Zeitpunkt verstreicht, bei dem bei Berührung der Raupenoberfläche mit einem Bleistift keine Masse mehr an dem Bleistift anhaftet;
   sowie
b) die Shore-A-Härte anhand von 2 mm dicken Folien ermittelt; die Folien werden dadurch erzeugt, daß die jeweilige Masse mit einer Spachtel auf eine Oberfläche aus Polytetrafluorethylen aufgetragen und der Luftfeuchtigkeit ausgesetzt wird. 7 Tage nach dem Auftragen wird der entstandene trockene Film untersucht. Die Ergebnisse sind in Tabelle 1 zusammengefaßt.

### Beispiel 2

Die in Beispiel 1 beschriebene Arbeitsweise wird wiederholt mit der Abänderung, daß anstelle der 4 g MgCl₂ 4 g CaCl₂ mit einem Feuchtigkeitsgehalt von < 3 Gew-% und einem Teilchendurchmesser von 180-600 µm (käuflich erhältlich bei der Fa. Aldrich, Deutschland) in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird wie in Beispiel 1 beschrieben anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 1 zusammengefaßt.

### Beispiel 3

Herstellung einer CaCl₂-Paste
CaCl₂ mit einem Feuchtigkeitsgehalt von < 3 Gew-% und einem Teilchendurchmesser von 180-600 µm wird in einem Gewichtsverhältnis 1:1 mit α,ω-Bis(trimethylsiloxy)polydimethylsiloxan der Viskosität 0,1 mm²/s vermischt und bei einer Temperatur von 150°C für eine Dauer von 15 Stunden ausgeheizt.

Die in Beispiel 1 beschriebene Arbeitsweise wird wiederholt mit der Abänderung, daß anstelle der 4 g MgCl₂ 8 g einer CaCl₂-Paste, deren Herstellung oben beschrieben ist, in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 1 zusammengefaßt.

### Beispiel 4

Herstellung einer MgGl₂-Paste
MgCl₂ mit einem Feuchtigkeitsgehalt von < 1,5 Gew-% und einem Teilchendurchmesser von 90 % < 44 µm wird in einem Gewichtsverhältnis 1:1 mit α,ω-Bis(trimethylsiloxy)polydimethylsiloxan der Viskosität 0,1 mm²/s vermischt und bei einer Temperatur von 150°C für eine Dauer von 15 Stunden ausgeheizt.

Die in Beispiel 1 beschriebene Arbeitsweise wird wiederholt mit der Abänderung, daß anstelle der 4 g MgCl₂ 8 g einer MgCl₂-Paste, deren Herstellung oben beschrieben ist, in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 1 zusammengefaßt.

### Vergleichsbeispiel 1

Die in Beispiel 1 beschriebene Arbeitsweise wird wiederholt mit der Abänderung, daß die 4 g MgCl₂ weggelassen werden.

Mit der so erhaltenen Masse wird weiter wie in Beispiel 1 beschrieben verfahren. Die Ergebnisse sind in Tabelle 1 zusammengefaßt.

### Vergleichsbeispiel 2

Die in Beispiel 1 beschriebene Arbeitsweise wird wiederholt mit der Abänderung, daß anstelle von 4 g MgCl₂ 4 g CaO (käuflich erhältlich bei Merck, Darmstadt) eingesetzt werden.

Mit der so erhaltenen Masse wird weiter wie in Beispiel 1 beschrieben verfahren. Die Ergebnisse sind in Tabelle 1 zusammengefaßt.

### Vergleichsbeispiel 3

Die in Beispiel 1 beschriebene Arbeitsweise wird wiederholt mit der Abänderung, daß anstelle von 4 g MgCl₂ 4 g Ca(NO₃)₂ (käuflich erhältlich bei Merck, Darmstadt) eingesetzt werden.

Mit der so erhaltenen Masse wird weiter wie in Beispiel 1 beschrieben verfahren. Die Ergebnisse sind in Tabelle 1 zusammengefaßt.

### Vergleichsbeispiel 4

Die in Beispiel 1 beschriebene Arbeitsweise wird wiederholt mit der Abänderung, daß anstelle von 4 g MgCl₂ 4 g CaSO₄ (käuflich erhältlich bei Aldrich, Deutschland) mit einem Feuchtigkeitsgehalt von < 1 Gew-% und einem Teilchendurchmesser von 90 % < 44 µm eingesetzt werden.

Mit der so erhaltenen Masse wird weiter wie in Beispiel 1 beschrieben verfahren. Die Ergebnisse sind in Tabelle 1 zusammengefaßt.

### Vergleichsbeispiel 5

Die in Beispiel 1 beschriebene Arbeitsweise wird wiederholt mit der Abänderung, daß anstelle von 4 g MgCl₂ 4 g Molekularsieb 0,4 nm (käuflich erhältlich bei der Fa. Merck, Darmstadt) eingerührt werden.

Mit der so erhaltenen Masse wird weiter wie in Beispiel 1 beschrieben verfahren. Die Ergebnisse sind in Tabelle 1 zusammengefaßt.

**Tabelle 1:**

| | | | | | | | | | | |
|---|---|---|---|---|---|---|---|---|---|---|
| Wo: Wochen; | | | | | | | | | | |
| HBZ: Hautbildungszeit in Minuten; | | | | | | | | | | |
| Sh-A: Shore-A-Härte; | | | | | | | | | | |
| h : Hautbildungszeit in Stunden | | | | | | | | | | |
| n.m. : nicht meßbar | | | | | | | | | | |
| - : nicht bestimmt | | | | | | | | | | |

| Beispiel V=Vergleich | nach Herstellung | | nach 2 Wo Lagerung | | nach 4 Wo Lagerung | | nach 8 Wo Lagerung | | nach 12 Wo Lagerung | |
|---|---|---|---|---|---|---|---|---|---|---|
| | HBZ | Sh-A | HBZ | Sh-A | HBZ | Sh-A | HBZ | Sh-A | HBZ | Sh-A |
| 1 | 15 | 20 | 45 | 20 | 50 | 17 | 55 | 15 | 50 | 13 |
| 2 | 15 | 20 | 15 | 18 | 15 | 15 | 25 | 10 | 40 | 10 |
| 3 | 10 | 15 | 30 | 13 | 40 | 13 | 60 | 10 | 60 | 10 |
| 4 | 35 | 18 | 55 | 15 | 50 | 15 | 40 | 18 | 50 | 23 |
| V1 | 15 | 20 | 80 | 18 | 105 | 10 | 4,5-5 h | 5 | 8-24 h | n.m. |
| V2 | 10 | 19 | 15 | 13 | 20 | 10 | 50 | 5 | 250 | n.m. |
| V3 | 10 | 20 | 10 | 18 | 20 | 9 | 90 | n.m. | 120 | n.m. |
| V4 | 10 | 19 | 47 h | n.m. | - | - | - | - | - | - |
| V5 | 15 | 21 | 45 | 18 | 90 | 12 | 200 | 5 | 3-4h | n.m. |

## Patentansprüche

1. Unter Ausschluß von Feuchtigkeit lagerfähige und bei Zutritt von Feuchtigkeit bei Raumtemperatur unter Abspaltung von Alkoholen zu Elastomeren vernetzbare Organopolysiloxanmassen herstellbar unter Verwendung von
(A) im wesentlichen linearen Polyorganosiloxanen mit mindestens zwei Organyloxyresten an einer jeden Endgruppe,
gegebenenfalls
(B) organyloxyfunktionellen Vernetzern mit mindestens drei Organyloxygruppen,
gegebenenfalls
(C) Kondensationskatalysatoren,
sowie
(D) CaCl₂ und/oder MgCl₂.

2. Organopolysiloxanmassen gemäß Anspruch 1, dadurch gekennzeichnet, daß es sich bei den Polyorganosiloxanen (A) um solche der allgemeinen Formel
(R²O)₃₋ₐR¹ ₐSiO-[R₂SiO]ₙ-SiR¹ ₐ(OR²)₃₋ₐ (I)
handelt, wobei
a 0 oder 1 ist,
R gleiche oder verschiedene SiC-gebundene Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, bedeutet,
R¹ gleich oder verschieden sein kann und Wasserstoffatom ist oder eine für R angegebene Bedeutung hat,
R² gleich oder verschieden sein kann und einen gegebenenfalls mit Amino-, Ester-, Ether-, Keto- und Halogengruppen substituierten Kohlenwasserstoffrest mit 1 bis 18 Kohlenstoffatomen, der mit Sauerstoffatomen unterbrochen sein kann, bedeutet und
n eine ganze Zahl von 10 bis 10 000 ist.

3. Organopolysiloxanmassen gemäß Anspruch 1 oder 2, dadurch gekennzeichnet, daß der Feuchtigkeitsgehalt von CaCl₂ und MgCl₂ unter 10 Gew-% liegt.

4. Organopolysiloxanmassen gemäß einem oder mehreren der Ansprüche 1 bis 3, dadurch gekennzeichnet, daß als Komponente (D) CaCl₂ und/oder MgCl₂ in pulverisierter Form eingesetzt wird, wobei der mittlere Teilchendurchmesser kleiner 100 µm ist.

5. Organopolysiloxanmassen gemäß einem oder mehreren der Ansprüche 1 bis 4, dadurch gekennzeichnet, daß sie Verbindung (D) in Mengen von 0,1 bis 10 Gewichtsteilen, bezogen auf 100 Gewichtsteile Organopolysiloxan (A), enthalten.

6. Organopolysiloxanmassen gemäß einem oder mehreren der Ansprüche 1 bis 5, dadurch gekennzeichnet, daß es sich um solche handelt, die
(A) Polyorganosiloxan der Formel (I),
(B) Vernetzer,
(C) Kondensationskatalysator,
(D) MgCl₂ und/oder CaCl₂ sowie
gegebenenfalls weitere Stoffe
enthalten.

7. Organopolysiloxanmassen gemäß einem oder mehreren der Ansprüche 1 bis 6, dadurch gekennzeichnet, daß es sich um solche handelt, die aus
(A) 100 Gewichtsteilen Polyorganosiloxan der Formel (I),
(B) 0,1 bis 50 Gewichtsteilen Vernetzer der Formel (III),
(C) 0,01 bis 10 Gewichtsteilen metallorganischen Kondensationskatalysator,
(D) 0,1 bis 10 Gewichtsteilen MgCl₂ und/oder CaCl₂,
(E) 0 bis 300 Gewichtsteilen Weichmacher,
(F) 0 bis 300 Gewichtsteilen Füllstoffe,
(G) 0 bis 50 Gewichtsteilen Haftvermittler und
(H) 0 bis 100 Gewichtsteilen Additive
bestehen.

8. Verfahren zur Herstellung der Organopolysiloxanmassen gemäß einem oder mehreren der Ansprüche 1 bis 7, dadurch gekennzeichnet, daß Komponenten (A) und (D) sowie gegebenenfalls (B), (C), (E), (F), (G) und (H) in beliebiger Reihenfolge miteinander vermischt werden.

9. Elastomere hergestellt durch Vernetzung der Organopolysiloxanmassen gemäß einem oder mehreren der Ansprüche 1 bis 7.

## Claims

1. Organopolysiloxane compositions which can be stored with exclusion of moisture and, on ingress of moisture, can be crosslinked at room temperature to elastomers, alcohols being split off, and which can be prepared using
(A) essentially linear polyorganosiloxanes having at least two organyloxy radicals on each end group,
if appropriate
(B) organyloxy-functional crosslinking agents having at least three organyloxy groups,
if appropriate
(C) condensation catalysts,
and
(D) CaCl₂ and/or MgCl₂.

2. Organopolysiloxane compositions according to Claim 1, characterized in that the polyorganosiloxanes are (A) those of the general formula
(R²O)₃₋ₐR¹ ₐSiO-[R₂SiO]ₙ-SiR¹ ₐ(OR²)₃₋ₐ (I)
in which
a is 0 or 1,
R is identical or different SiC-bonded hydrocarbon radicals having 1 to 18 carbon atoms, which are optionally substituted by halogen atoms, amino groups, ether groups, ester groups, epoxide groups, mercapto groups, cyano groups or (poly)glycol radicals, the latter being built up from oxyethylene and/or oxypropylene units, and
R¹ can be identical or different and is a hydrogen atom or has a meaning given for R,
R² can be identical or different and is a hydrocarbon radical having 1 to 18 carbon atoms which is optionally substituted by amino, ester, ether, keto and halogen groups and can be interrupted by oxygen atoms and
n is an integer from 10 to 10,000.

3. Organopolysiloxane compositions according to Claim 1 or 2, characterized in that the moisture content of CaCl₂ and MgCl₂ is less than 10 % by weight.

4. Organopolysiloxane compositions according to one or more of Claims 1 to 3, characterized in that CaCl₂ and/or MgCl₂ in pulverized form, the average particle diameter being less than 100 µm, is/are employed as component (D).

5. Organopolysiloxane compositions according to one or more of Claims 1 to 4, characterized in that they comprise compound (D) in amounts of 0.1 to 10 parts by weight, based on 100 parts by weight of organopolysiloxane (A).

6. Organopolysiloxane compositions according to one or more of Claims 1 to 5, characterized in that they comprise
(A) polyorganosiloxane of the formula (I),
(B) crosslinking agent,
(C) condensation catalyst,
(D) MgCl₂ and/or CaCl₂ and
if appropriate further substances.

7. Organopolysiloxane compositions according to one or more of Claims 1 to 6, characterized in that they comprise
(A) 100 parts by weight of polyorganosiloxane of the formula (I),
(B) 0.1 to 50 parts by weight of crosslinking agent of the formula (III),
(C) 0.01 to 10 parts by weight of organometallic condensation catalyst,
(D) 0.1 to 10 parts by weight of MgCl₂ and/or CaCl₂,
(E) 0 to 300 parts by weight of plasticizer,
(F) 0 to 300 parts by weight of fillers,
(G) 0 to 50 parts by weight of adhesion promoter and
(H) 0 to 100 parts by weight of additives.

8. Process for the preparation of the organopolysiloxane compositions according to one or more of Claims 1 to 7, characterized in that components (A) and (D) and, if appropriate (B), (C), (E), (F), (G) and (H) are mixed with one another in any desired sequence.

9. Elastomers prepared by crosslinking the organopolysiloxane compositions according to one or more of Claims 1 to 7.

## Revendications

1. Compositions d'organopolysiloxane pouvant être stockées à l'abri de l'humidité et pouvant être réticulées à température ambiante, par pénétration d'humidité, pour donner des élastomères, avec élimination d'alcools, lesquelles compositions peuvent être préparées en utilisant
(A) des polyorganosiloxanes essentiellement linéaires ayant au moins deux radicaux organyloxy sur chaque groupe terminal,
éventuellement
(B) des agents de réticulation à fonction organyloxy ayant au moins trois groupes organyloxy,
éventuellement
(C) des catalyseurs de condensation,
et
(D) du CaCl₂ et/ou du MgCl₂.

2. Compositions d'organopolysiloxane selon la revendication 1, caractérisées en ce que les polyorganosiloxanes (A) sont ceux de formule générale
(R²O)₃₋ₐR¹ ₐSiO-[R₂SiO]ₙ-SiR¹ ₐ(OR²)₃₋ₐ (I)
dans laquelle,
a vaut 0 ou 1,
R représente des radicaux hydrocarbonés liés à SiC, identiques ou différents, ayant de 1 à 18 atomes de carbone, qui sont éventuellement substitués par des atomes d'halogène, des groupes amino, des groupes éther, des groupes ester, des groupes époxy, des groupes mercapto, des groupes cyano ou des radicaux (poly)glycol, ces derniers étant constitués de motifs oxyéthylène et/ou oxypropylène,
R¹ peut être identique ou différent et est un atome d'hydrogène ou a une des significations données pour R,
R² peut être identique ou différent et représente un radical hydrocarboné ayant de 1 à 18 atomes de carbone, éventuellement substitué par des groupes amino, ester, éther, cétone et halogène et peut être interrompu par des atomes d'oxygène, et
n est un entier de 10 à 10 000.

3. Compositions d'organopolysiloxane selon la revendication 1 ou 2, caractérisées en ce que la teneur en humidité de CaCl₂ et de MgCl₂ est inférieure à 10% en poids.

4. Compositions d'organopolysiloxane selon l'une ou plusieurs des revendications 1 à 3, caractérisées en ce que l'on utilise, en tant que composant (D), du CaCl₂ et/ou du MgCl₂ sous forme pulvérisée, le diamètre moyen de particule étant inférieur à 100 µm.

5. Compositions d'organopolysiloxane selon l'une ou plusieurs des revendications 1 à 4, caractérisées en ce qu'elles contiennent le composé (D) en quantités allant de 0,1 à 10 parties en poids, par rapport à 100 parties en poids d'organopolysiloxane (A).

6. Compositions d'organopolysiloxane selon l'une ou plusieurs des revendications 1 à 5, caractérisées en ce qu'elles contiennent
(A) un polyorganosiloxane de formule (I),
(B) un agent de réticulation,
(C) un catalyseur de condensation,
(D) du MgCl₂ et/ou du CaCl₂ et
éventuellement d'autres substances.

7. Compositions d'organopolysiloxane selon l'une ou plusieurs des revendications 1 à 6, caractérisées en ce qu'elles sont constituées de
(A) 100 parties en poids de polyorganosiloxane de formule (I),
(B) 0,1 à 50 parties en poids d'agent de réticulation de formule (III),
(C) 0,01 à 10 parties en poids de catalyseur de condensation organométallique,
(D) 0,1 à 10 parties en poids de MgCl₂ et/ou de CaCl₂,
(E) 0 à 300 parties en poids de plastifiant,
(F) 0 à 300 parties en poids de charges,
(G) 0 à 50 parties en poids de promoteurs d'adhésion et
(H) 0 à 100 parties en poids d'additifs.

8. Procédé de préparation des compositions d'organopolysiloxane selon l'une ou plusieurs des revendications 1 à 7, caractérisé en ce que les composants (A) et (D) et éventuellement (B), (C), (E), (F), (G) et (H) sont mélangés les uns avec les autres dans un ordre quelconque.

9. Elastomères préparés par réticulation des compositions d'organopolysiloxanes selon l'une ou plusieurs des revendications 1 à 7.
